# EUROPEAN PATENT SPECIFICATION

(11) **EP 2 623 893 B1**
(45) Date of publication and mention of the grant of the patent: **26.06.2019**
(21) Application number: 11828260.7
(22) Date of filing: 28.02.2011
(51) Int. Cl.: F25B 13/00, F25B 1/00

(54) **HEAT STORAGE DEVICE AND AIR CONDITIONER COMPRISING THE HEAT STORAGE DEVICE**
WÄRMESPEICHERVORRICHTUNG UND KLIMAANLAGE MIT DER WÄRMESPEICHERVORRICHTUNG
DISPOSITIF DE STOCKAGE DE CHALEUR ET CONDITIONNEUR D'AIR COMPRENANT LE DISPOSITIF DE STOCKAGE DE CHALEUR

(30) Priority: 29.09.2010 JP 2010218183
(43) Date of publication of application: 07.08.2013
(73) Proprietor: Panasonic Corporation, Osaka 571-8501 (JP)
(72) Inventor: YAMAMOTO, Noriaki, Osaka 540-6207 (JP); KURISUTANI, Hiroharu, Osaka 540-6207 (JP); IMASAKA, Toshiyuki, Osaka 540-6207 (JP); KUBO, Tsugio, Osaka 540-6207 (JP); OKA, Kouji, Osaka 540-6207 (JP)
(74) Representative: Eisenführ Speiser
(86) International application number: PCT/JP2011/001134
(87) International publication number: WO 2012/042690

(56) References cited:
- JP-A- 1 008 376
- JP-A- 5 198 709
- JP-A- H0 518 614
- JP-A- 2005 333 056
- JP-A- 2005 333 056
- JP-A- 2010 206 122
- JP-B2- H 079 304
- JP-U- H02 128 065
- US-A- 5 213 868
- US-B1- 6 354 099

## Description

### TECHNICAL FIELD

The present invention relates to a heat storage device disposed to surround a compressor and accommodating a heat storage material that stores heat generated by the compressor, as well as to an air conditioner having the heat storage device.

### BACKGROUND ART

A conventional heat pump air conditioner performs defrosting by switching from a heating cycle to a cooling cycle with use of a four-way valve when frost has been formed on an outdoor heat exchanger during heating operation. In this defrosting method, although an indoor fan is stopped, cold air gradually flows out of an indoor unit, thus posing a defect of warmth being lost.

In view of the above, there has been proposed another air conditioner that includes a heat storage device mounted on a compressor in an outdoor unit for the purpose of defrosting by utilizing waste heat of the compressor stored in a heat storage tank during heating operation (see, for example, Patent Document 1).

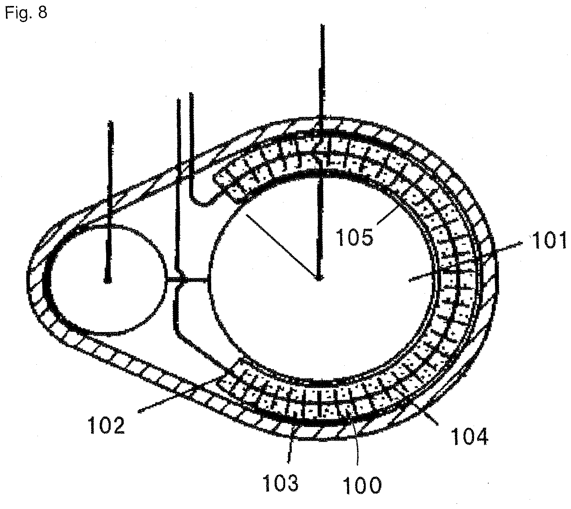

Fig. 8 is a transverse sectional view exemplifying a conventional heat storage device. In Fig. 8, a heat storage device 100 is fixed to the outer peripheral surface of a compressor 101. The heat storage device 100 includes a heat storage tank 102, a heat storage material 103, and a heat exchanger 104. The heat storage tank 102 has a heat transfer surface 105 that is located to be in contact with the outer peripheral surface of the compressor 101, so that waste heat of the compressor is stored in the heat storage tank.

However, in the above configuration, if the compressor 101 and the heat transfer surface 105 of the heat storage tank 102 are not sufficiently in close contact with each other, transfer of heat from the compressor to the heat storage tank is inhibited and heat may not be sufficiently stored in the heat storage tank.

From Patent Document 2, a heat storage device according to the preamble of claim 1 is known.

Patent Documents 3 and 4 are located on an entirely different field of technology, in which heat has to be removed in order to protect electronic components. Patent Document 3 is dedicated to thermally conductive interface material formed of a polymeric binder and one or more thermal fillers. One or both of the major surfaces of the interface material has a means for removing air from between that surface and the surface to which it is attached, such as a heat sinker electronic component. Patent Document 4 suggests to provide many small holes formed in the thermal conduction sheet
so as to allow air staying between the thermal conduction sheet and an IC chip to escape.

### PATENT DOCUMENTS

Patent Document 1 : JP 03-31666 A
Patent Document 2: JP H07-9304 B2
Patent Document 3: US 5,213,868 A
Patent Document 4: JP 2005-333056 A

### SUMMARY OF THE INVENTION

### PROBLEM TO BE SOLVED BY THE INVENTION

In the conventional heat storage device shown in Fig. 8, in order to secure the adhesion property between the compressor 101 and the heat transfer surface 105 of the heat storage tank 102, there may be an attachment technique in which a heat transfer sheet is interposed between the compressor 101 and the heat transfer surface 105 of the heat storage tank 102. However, in the case of attaching with use of the interposed heat transfer sheet, air may be left upon attaching the heat storage tank to the compressor. Such air left therebetween serves as a heat insulating layer to remarkably increase thermal resistance from the compressor to the heat storage tank, which also results in deterioration in heat transfer property.

The present invention has been made in view of the above problem. It is an object of the present invention to provide a heat storage device and an air conditioner having the heat storage device, which enables increase in temperature of a heat storage material in a short period of time, by securing the adhesion property between a compressor and a heat transfer surface of a heat storage tank as well as preventing air from being left between the compressor and the heat storage tank, so as to secure the excellent heat transfer property.

### MEANS TO SOLVE THE PROBLEM

In order to achieve the object mentioned above, the present invention provides a heat storage device disposed to surround a substantially cylindrical compressor, the heat storage device including: a heat storage material for storing heat generated by the compressor; a heat storage tank having a side wall and a bottom wall which define an inner space, the heat storage material being accommodated in the inner space; the heat storage tank having a heat transfer surface serving as an
outer surface of the side wall of the heat storage tank for transferring heat of the compressor to the heat storage material, the heat transfer surface being disposed to surround the substantially cylindrical compressor; and a flexible sheet member interposed between the heat transfer surface and the compressor, wherein the sheet member is configured by a heat transfer sheet for transferring heat generated by the compressor to the heat transfer surface of the heat storage tank, the sheet member being provided with a plurality of vent holes, wherein a plurality of grooves for discharging air is provided in the heat transfer surface of the heat storage tank, wherein the grooves extend in a longitudinal direction and wherein the heat transfer sheet is 0.5 to 2.0 mm in thickness.

### EFFECTS OF THE INVENTION

According to the present invention, the sheet member is provided between the compressor and the heat storage tank, so that the adhesion property is secured between the compressor and the heat storage tank. Furthermore, because the sheet member is provided with the vent holes, air is prevented from being left between the compressor and the heat storage tank upon attachment. Thus, it is possible to keep the heat transfer property between the compressor and the heat storage tank. It is therefore possible to provide the heat storage device and an air conditioner including the heat storage device, which enables increase in temperature of the heat storage material in a short period of time due to the sufficient heat transfer property.

### BRIEF DESCRIPTION OF THE DRAWINGS

Fig. 1 is a configuration diagram of an air conditioner including a heat storage device according to the present invention.
Fig. 2 is a pattern diagram of the air conditioner of Fig. 1, depicting operation thereof and a flow of a refrigerant during normal heating.
Fig. 3 is a pattern diagram of the air conditioner of Fig. 1, depicting operation thereof and a flow of the refrigerant during defrosting/heating.
Fig. 4 is a perspective view of the heat storage device according to the present invention with a compressor and an accumulator being attached thereto.
Fig. 5 is an exploded perspective view of a heat storage tank and a heat transfer sheet.
Fig. 6 is a graph indicating the relationship between an area ratio of vent holes in the heat transfer sheet and the heat transfer property.
Fig. 7 is a graph indicating the relationship between the thickness of the heat transfer sheet and the heat transfer property.
Fig. 8 is a transverse sectional view of a conventional heat storage device.

### DESCRIPTION OF EMBODIMENTS

The present invention provides a heat storage device disposed to surround a substantially cylindrical compressor, the heat storage device including: a heat storage material for storing heat generated by the compressor; a heat storage tank accommodating the heat storage material; a heat transfer surface serving as a side surface of the heat storage tank, for transferring heat of the compressor to the heat storage material; and a highly flexible sheet member interposed between the heat transfer surface and the compressor, the sheet member being provided with a plurality of vent holes. This configuration can improve the adhesion property between the compressor and the heat storage tank as well as suppress deterioration in heat transfer property by preventing air from being left therebetween.

The sheet member is preferably configured by a heat transfer sheet of high heat conductivity, so as to improve the heat transfer property.

The heat transfer sheet is preferably provided with the vent holes that occupy 25% or less of an entire area of the heat transfer sheet.

In this configuration, the vent holes are provided so as to occupy 25% or less of the entire area of the heat transfer sheet, so that the heat transfer property can be kept between the compressor and the heat storage tank. It is therefore possible to provide the heat storage device and an air conditioner including the heat storage device, which enables increase in temperature of the heat storage material in a short period of time due to the sufficient heat transfer property.

Preferably, the vent holes provided in the heat transfer sheet each have a hole diameter of ϕ1 mm to ϕ3 mm, and are aligned substantially at equal intervals of 5 mm to 15 mm. This configuration can particularly prevent air from being left unevenly so as to secure an appropriate heat transfer area. It is therefore possible to provide the heat storage device and an air conditioner including the heat storage device, which enables increase in temperature of the heat storage material in a shorter period of time.

According to the present invention, the heat transfer sheet is 0.5 to 2.0 mm in thickness. In this configuration, even in the case where the heat transfer sheet is provided with the vent holes, it is possible to prevent deterioration in heat transfer property due to thermal resistance of the heat transfer sheet itself. It is therefore possible to provide the heat storage device and an air conditioner including the heat storage device, which enables increase in temperature of the heat storage material in a shorter period of time.

An embodiment of the present invention is described below with reference to the drawings. It should be noted that the present invention is not limited to this embodiment.

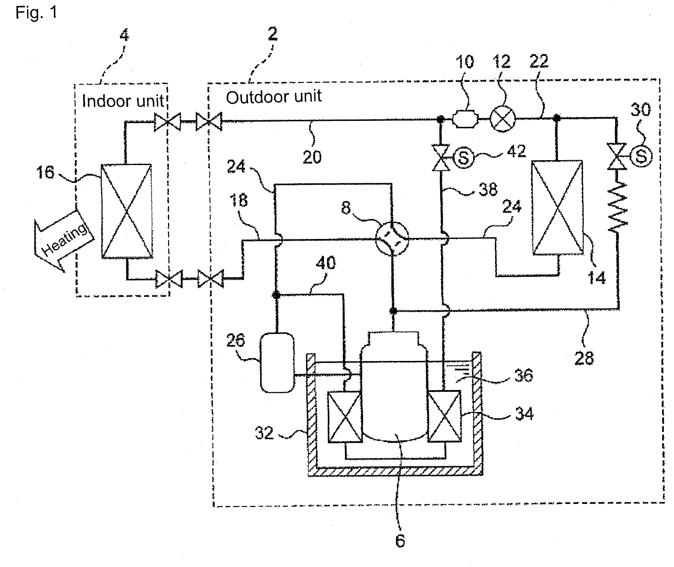

Fig. 1 depicts a configuration of an air conditioner including a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. These components are connected to each other via refrigerant piping so as to configure a refrigeration cycle.

More specifically, the compressor 6 and the indoor heat exchanger 16 are connected to each other via a first pipe 18 on which the four-way valve 8 is provided, and the indoor heat exchanger 16 and the expansion valve 12 are connected to each other via a second pipe 20 on which the strainer 10 is provided. Furthermore, the expansion valve 12 and the outdoor heat exchanger 14 are connected to each other via a third pipe 22, and the outdoor heat exchanger 14 and the compressor 6 are connected to each other via a fourth pipe 24.

The four-way valve 8 is located midway on the fourth pipe 24, and an accumulator 26 for separating a liquid refrigerant and a gaseous refrigerant is provided on the fourth pipe 24 on a refrigerant suction side of the compressor 6. The compressor 6 and the third pipe 22 are connected to each other via a fifth pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 used for exchanging heat with the heat storage heat exchanger 34. The heat storage tank 32, the heat storage heat exchanger 34, and the heat storage material 36 constitute the heat storage device.

Moreover, the second pipe 20 and the heat storage heat exchanger 34 are connected to each other via a sixth pipe 38, and the heat storage heat exchanger 34 and the fourth pipe 24 are connected to each other via a seventh pipe 40. A second solenoid valve 42 is provided on the sixth pipe 38.

The indoor unit 4 accommodates therein, in addition to the indoor heat exchanger 16, a ventilation fan (not shown), vertical wind direction changing blades (not shown), and horizontal wind direction changing blades (not shown). The indoor heat exchanger 16 exchanges heat between indoor air sucked into the indoor unit 4 by the ventilation fan and a refrigerant flowing through the indoor heat exchanger 16 so that air heated or cooled by heat exchange may be blown into a room during heating or cooling, respectively. As an occasion demands, the vertical wind direction changing blades vertically change the direction of air blown out of the indoor unit 4 and the horizontal wind direction changing blades horizontally change the direction of air brown out of the indoor unit 4.

The compressor 6, the ventilation fan, the vertical wind direction changing blades, the horizontal wind direction changing blades, the four-way valve 8, the expansion valve 12, the solenoid valves 30 and 42, and the like are electrically connected to and controlled by a controller (for example, a microcomputer not shown).

The connection relationship between and functions of the components in refrigeration cycle equipment thus configured according to the present invention are described below with reference to a flow of the refrigerant, exemplifying the case of heating operation.

The refrigerant discharged from a discharge port of the compressor 6 passes through the four-way valve 8 and reaches the indoor heat exchanger 16 via the first pipe 18. The refrigerant condenses in the indoor heat exchanger 16 by exchanging heat with indoor air, leaves the indoor heat exchanger 16, and passes through the second pipe 20 as well as through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third pipe 22. The refrigerant then evaporates in the outdoor heat exchanger 14 by exchanging heat with outdoor air and passes through the fourth pipe 24, the four-way valve 8, and the accumulator 26, before the refrigerant returns to a suction port of the compressor 6.

The fifth pipe 28 branched from the first pipe 18 between the discharge port of the compressor 6 and the four-way valve 8 joins the third pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed to surround and contact the compressor 6, so as to store heat generated by the compressor 6 in the heat storage material 36. The sixth pipe 38 branched from the second pipe 20 between the indoor heat exchanger 16 and the strainer 10 reaches an inlet of the heat storage heat exchanger 34 via the second solenoid valve 42, and the seventh pipe 40 extending from an outlet of the heat storage heat exchanger 34 joins the fourth pipe 24 between the four-way valve 8 and the accumulator 26. Alternatively, the joining position may be between the accumulator 26 and the compressor 6. In such a case, it is possible to avoid absorption of heat due to heat capacity of the accumulator 26 itself.

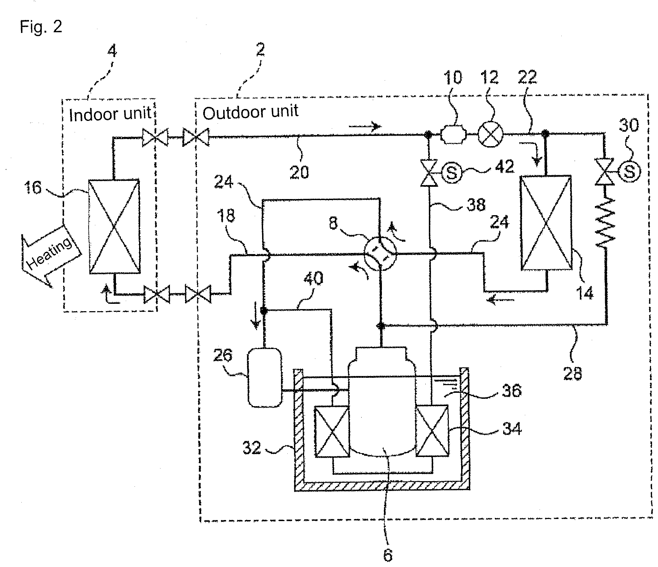

Operation of the air conditioner during normal heating is described next with reference to Fig. 2 that schematically depicts the operation of the air conditioner of Fig. 1 and a flow of the refrigerant during normal heating.

During normal heating operation, the first solenoid valve 30 and the second solenoid valve 42 are controlled to be closed. In this case, as described above, the refrigerant discharged from the discharge port of the compressor 6 passes through the four-way valve 8 and reaches the indoor heat exchanger 16 via the first pipe 18. Having condensed by exchanging heat with indoor air in the indoor heat exchanger 16, the refrigerant leaves the indoor heat exchanger 16, passes through the second pipe 20, and reaches the expansion valve 12. The refrigerant is then reduced in pressure by the expansion valve 12 and reaches the outdoor heat exchanger 14 via the third pipe 22. Having evaporated by exchanging heat with outdoor air in the outdoor heat exchanger 14, the refrigerant passes through the fourth pipe 24 as well as through the four-way valve 8 and returns to the suction port of the compressor 6.

Heat generated by the compressor 6 is transferred from an outer wall of the compressor 6 to an outer wall of the heat storage tank 32 and is stored in the heat storage material 36 that is accommodated in the heat storage tank 32.

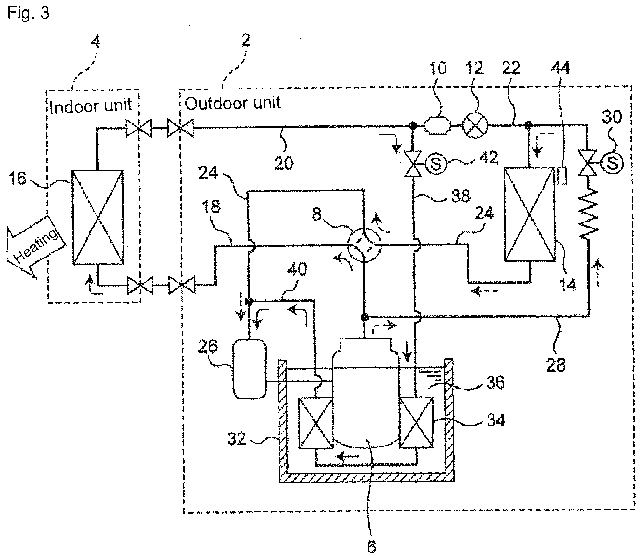

Operation of the air conditioner during defrosting/heating is described next with reference to Fig. 3 that schematically depicts the operation of the air conditioner of Fig. 1 and a flow of the refrigerant during defrosting/heating. In this figure, solid arrows indicate a flow of the refrigerant used for heating, and dotted arrows indicate a flow of the refrigerant used for defrosting.

If frost is formed and grows on the outdoor heat exchanger 14 during normal heating operation described above, airflow resistance of the outdoor heat exchanger 14 increases to thereby reduce the amount of air passing therethrough, resulting in reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with the evaporating temperature in the case where no frost is formed, the controller outputs a command to shift from normal heating operation to defrosting/heating operation.

When the air conditioner is shifted from normal heating operation to defrosting/heating operation, the first solenoid valve 30 and the second solenoid valve 42 are controlled to be opened. In this case, in addition to the flow of the refrigerant during normal heating operation as described above, part of a gaseous refrigerant discharged from the discharge port of the compressor 6 passes through the fifth pipe 28 and the first solenoid valve 30 and joins the refrigerant passing through the third pipe 22 to heat the outdoor heat exchanger 14. Having condensed and turned into a liquid phase, the refrigerant passes through the fourth pipe 24 and returns to the suction port of the compressor 6 via the four-way valve 8 and the accumulator 26.

Furthermore, part of the liquid refrigerant diverged from the second pipe 20 between the indoor heat exchanger 16 and the strainer 10 passes through the sixth pipe 38 and the second solenoid valve 42 and absorbs heat from the heat storage material 36 in the heat storage heat exchanger 34. The liquid refrigerant then evaporates and turns into a gas phase. The resultant gaseous refrigerant passes through the seventh pipe 40, joins the refrigerant passing through the fourth pipe 24, and returns to the suction port of the compressor 6 via the accumulator 26.

Although the refrigerant returning to the accumulator 26 contains the liquid refrigerant returning from the outdoor heat exchanger 14, the latter is admixed with the hot gaseous refrigerant returning from the heat storage heat exchanger 34 to thereby promote evaporation of the liquid refrigerant. Accordingly, the liquid refrigerant may not pass through the accumulator 26 and return to the compressor 6, thus making it possible to enhance the reliability of the compressor 6.

At the start of defrosting/heating operation, the temperature of the outdoor heat exchanger 14 is below the freezing point due to adhesion of frost, but when the outdoor heat exchanger 14 is heated by the gaseous refrigerant discharged from the discharge port of the compressor 6, frost melts at around zero degree and the temperature of the outdoor heat exchanger 14 starts to increase again upon termination of melting of the frost. When the temperature sensor 44 detects such temperature rise of the outdoor heat exchanger 14, it is determined that defrosting has been completed and the controller outputs a command to shift from defrosting/heating operation to normal heating operation.

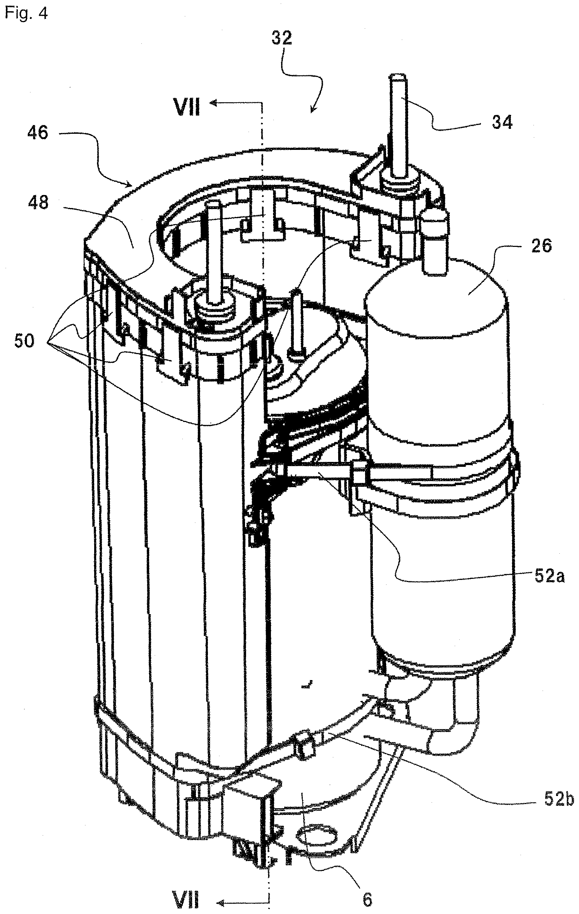

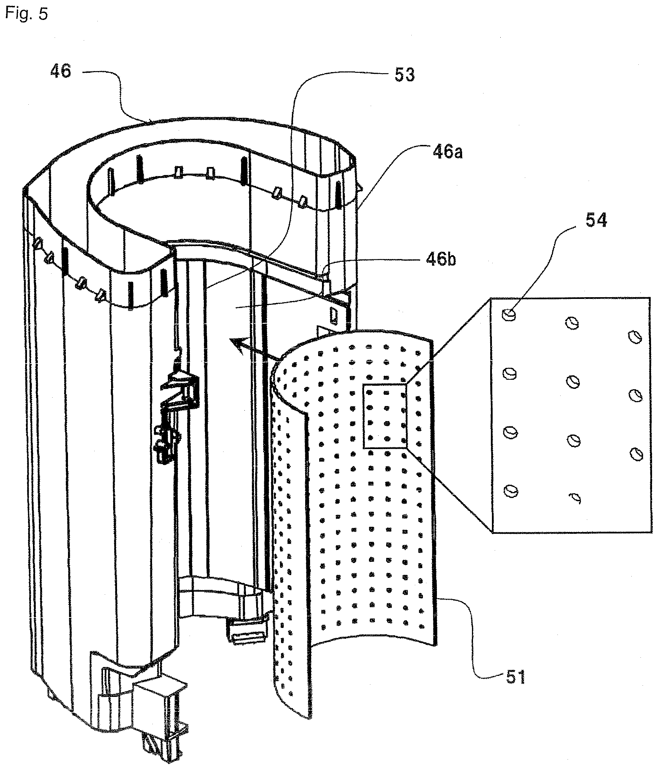

Figs. 4 and 5 each depict the heat storage device. As described earlier, the heat storage device includes the heat storage tank 32, the heat storage heat exchanger 34, and the heat storage material 36. Fig. 4 depicts a state where the compressor 6 and the accumulator 26 attached to the compressor 6 are installed in the heat storage device. Fig. 5 is an exploded perspective view of the heat storage tank and the heat transfer sheet.

As shown in Figs. 4 and 5, the heat storage tank 32 includes a heat storage tank body 46 made of resin and having an upper opening, as well as a side wall 46a, a bottom wall (not shown), and a heat transfer surface 46b in contact with the compressor, a lid 48 made of resin and closing the upper opening of the heat storage tank body 46, and a packing member made of, for example, silicon rubber and interposed between the heat storage tank body 46 and the lid 48. The lid 48 is fixed to the heat storage tank body 46 by means of claws 50. On the heat storage tank body 46, the heat transfer surface 46b in contact with the compressor 6 is provided with an air releasing groove 53 used for releasing bubbles left therebetween upon attachment. The heat transfer surface 46b of the heat storage tank body 46 and the compressor 6 are attached to each other with a heat transfer sheet 51, which is provided with vent holes 54, being interposed therebetween. In the present embodiment, the heat storage tank body 46 and the heat transfer surface 46b are made of the same resin material. Alternatively, only the heat transfer surface 46b may be made of metal or a resin material in which carbon having higher heat conductivity relative to the other heat storage tank walls is mixed as a filler. In this case, it is possible to further improve the heat transfer property from the compressor 6 to the heat storage material 36.

On the heat storage tank body 46, the heat transfer surface 46b in contact with the compressor has a generally cylindrical shape of a predetermined diameter and is partially cut off. Because the compressor 6 and the heat transfer sheet 51 are accommodated therein, the heat transfer surface 46b has an inner diameter slightly larger than the outer diameter of the compressor 6 in consideration of an attachment margin and the like.

The heat storage heat exchanger 34 is configured by, for example, a copper pipe bent into a serpiginous shape and is accommodated in the heat storage tank body 46. The heat storage heat exchanger 34 has opposite ends extending upward from the lid 48. One of the ends is connected to the sixth pipe 38 (see Fig. 1), while the other one of the ends is connected to the seventh pipe 40 (see Fig. 1). The heat storage tank body 46, which is surrounded with the side wall 46a, the bottom wall, and the heat transfer surface 46b in contact with the compressor, has an internal space accommodating the heat storage heat exchanger 34 and filled with the heat storage material 36.

The heat storage tank body 46 is transversely in close contact with the compressor so as to hold the compressor 6, and is fastened to the accumulator 26 and the compressor 6 by means of bands 52a and 52b at upper and lower positions, respectively, so as to be securely fixed.

Although Fig. 5 does not illustrate the heat storage heat exchanger 34, the heat storage heat exchanger 34 is attached to the lid 48 before the lid 48 is fixed to the heat storage tank body 46, and is accommodated in the heat storage tank 32.

Described next is the behavior of the heat storage device configured as described above.

As described earlier, the heat storage device sores, in the heat storage material 36, heat generated by the compressor 6 during heating operation. Upon shifting from normal heating operation to defrosting/heating operation, the heat storage heat exchanger 34 obtains to utilize the heat. Therefore, it is more preferred if the heat transfer path from the outer surface of the compressor 6 to the heat storage material 36 has the better heat transfer property, so as to sufficiently increase the temperature of the heat storage material 36 before frost grows during heating operation.

The heat transfer property of the heat transfer path from the outer surface of the compressor 6 to the heat storage material 36 is dependent on the adhesion property between the heat storage tank body 46 and the compressor 6, the size of the heat transfer area, and the length of the heat transfer path.

In view of this, in the heat storage device according to the present invention, there is interposed, between the compressor 6 and the heat transfer surface 46b of the heat storage tank body 46, the heat transfer sheet 51 that is configured by a flexible and easily deformable sheet member. In this configuration, even if there is variation in production of the compressor 6 or the heat storage tank body 46, it is possible to keep the adhesion property between the compressor 6 and the heat storage tank body 46. Furthermore, in order to prevent bubbles from being left upon attachment, the heat transfer sheet is provided with the vent holes 54, which realizes more efficient storage of heat into the heat storage material 36.

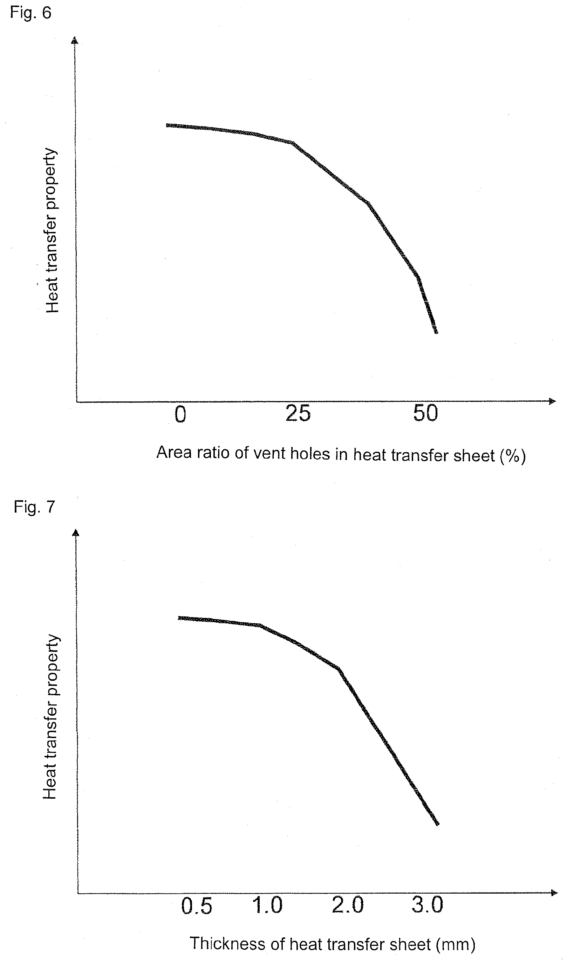

Moreover, as indicated in Fig. 6, in a case where the area ratio of the vent holes exceeds 25% of the entire heat transfer sheet, the heat transfer property is deteriorated remarkably due to reduction in heat transfer area. Therefore, the area ratio of the vent holes is desirably set to 25% or less of the entire heat transfer sheet.

In order to prevent air from being left as well as secure the heat transfer area, desirably, the vent holes each have a hole diameter (diameter) of ϕ1 mm to ϕ3 mm and are aligned substantially at equal intervals of 5 mm to 15 mm. In this configuration, the heat storage tank body 46 is made in close contact with the compressor 6, and is fastened by means of the bands 52a and 52b. It is possible to prevent the vent holes from being shut even if the heat transfer sheet is deformed to some extent, which prevents air from being left unevenly. It is therefore possible to achieve the excellent heat transfer property.

In the present example, the vent holes of ϕ2.0 mm are aligned at equal intervals of 10 mm, so as to achieve the configuration that maximally keeps the heat transfer area as well as secures the vent holes preventing air from being left.

Furthermore, according to the present invention, the heat transfer sheet 51 is 0.5 mm to 2.0 mm in thickness.

Fig. 7 is a graph indicating the heat transfer property with respect to the thickness of the heat transfer sheet in a case where the area ratio of the vent holes is 10% of the entire heat transfer sheet. The thickness of the heat transfer sheet 51 needs to be selected appropriately depending on the accuracy in dimension of the compressor 6 and the heat storage tank body 46, and the like. The heat transfer property is deteriorated remarkably if the thickness of the heat transfer sheet exceeds 2.0 mm. In view of this, the thickness of the heat transfer sheet 51 is set to 0.5 mm to 2.0 mm. It is therefore possible to keep the heat transfer property even in the case where the heat transfer sheet is provided with the vent holes.

The heat transfer surface 46b may be provided with a plurality of longitudinal grooves (53), which allow left air to be discharged more effectively.

Air left between the heat transfer sheet 51 and the heat transfer surface 46b can be discharged outside along the grooves, which leads to further improvement in adhesion property between the heat transfer sheet 51 and the heat transfer surface 46b. As a result, heat of the compressor 6 can be efficiently transferred to the heat storage material accommodated in the heat storage tank 32.

The pitches of the grooves need to be small so as to discharge air of a diameter as small as possible. To the contrary, the grooves need to be provided at appropriate pitches so as not to inhibit transfer of heat from the compressor 6 to the heat storage tank 32 due to air left in a large number of grooves. In the present invention, the pitches are set in the range from 1 mm to 30 mm.

If the vent holes 54 in the heat transfer sheet 51 are provided at pitches equal to the pitches of the grooves in the heat transfer surface 46b, air discharged from the gap between the compressor 6 and the heat transfer sheet 51 via the vent holes 54 can be discharged outside naturally along the grooves in the heat transfer surface 46b located on the outer periphery. In order to realize such discharge more reliably, it is further preferred that the grooves in the heat transfer surface 46b and the vent holes 54 in the heat transfer sheet 51 are provided at pitches matched with each other, so as to be located at the same positions.

Furthermore, in the present example, the heat transfer sheet is 1.5 mm in thickness, so that the heat transfer property is kept while securing the adhesion property between the compressor 6 and the heat storage tank body 46.

### INDUSTRIAL APPLICABILITY

The heat storage device according to the present invention has the adhesion member in close contact with the compressor, so as to efficiently store, in the heat storage material, heat generated by the compressor. Therefore, the heat storage device according to the present invention is useful in an air conditioner, a refrigerator, a water heater, a heat pump washing machine, or the like.

### EXPLANATION OF REFERENCE NUMERALS

2 Outdoor unit, 4 Indoor unit, 6 Compressor, 8 Four-way valve,
10 Strainer, 12 Expansion valve, 14 Outdoor heat exchanger,
16 Indoor heat exchanger, 18 First pipe, 20 Second pipe,
22 Third pipe, 24 Fourth pipe, 26 Accumulator, 28 Fifth pipe,
30 First solenoid valve, 32 Heat storage tank,
34 Heat storage heat exchanger, 36 Heat storage material,
38 Sixth pipe, 40 Seventh pipe, 42 Second solenoid valve,
44 Temperature sensor, 46 Heat storage tank body, 46a Side wall
46b Heat transfer surface, 48 Lid, 50 Claw, 51 Heat transfer sheet,
52a, 52b Band, 53 Air releasing groove, 54 Vent hole

## Claims

1. A heat storage device disposed to surround a substantially cylindrical compressor (6), the heat storage device comprising:
a heat storage material (36) for storing heat generated by the compressor (6);
a heat storage tank (32) having a side wall (46a) and a bottom wall which define an inner space, the heat storage material (36) being accommodated in the inner space, the heat storage tank (32) having a heat transfer surface (46b) serving as an outer surface of the side wall of the heat storage tank (32) for transferring heat of the compressor (6) to the heat storage material (36), the heat transfer surface (46b) being disposed to surround the substantially cylindrical compressor (6); and
a flexible sheet member interposed between the heat transfer surface (46b) and the compressor (6), wherein the sheet member is configured by a heat transfer sheet (51) for transferring heat generated by the compressor (6) to the heat transfer surface (46b) of the heat storage tank (32),
**characterized by**
the sheet member being provided with a plurality of vent holes (54),
wherein a plurality of grooves (53) for discharging air is provided in the heat transfer surface (46b) of the heat storage tank (32), and the grooves extend in a longitudinal direction,
wherein the heat transfer sheet (51) is 0.5 to 2.0 mm in thickness.

2. The heat storage device according to claim 1, wherein
the grooves in the heat transfer surface (46b) and the vent holes (54) in the heat transfer sheet (51) are provided at pitches matched with each other so as to be located at the same positions.

3. The heat storage device according to claim 2, wherein the vent holes (54) have a total area occupying 25% or less of an area of the entire heat transfer sheet (51).

4. The heat storage device according to claim 2 or 3, wherein the vent holes (54) provided in the heat transfer sheet (51) each have a hole diameter of ϕ1 mm to ϕ3 mm, and are aligned substantially at equal intervals of 5 mm to 15 mm.

5. An air conditioner comprising a heat storage device according to any one of claims 1 to 4.

## Patentansprüche

1. Wärmespeichervorrichtung, die so angeordnet ist, dass sie einen im Wesentlichen zylindrischen Kompressor (6) umgibt, wobei die Wärmespeichervorrichtung umfasst:
ein Wärmespeichermaterial (36) zum Speichern von Wärme, die von dem Kompressor (6) erzeugt wird;
einen Wärmespeichertank (32) mit einer Seitenwand (46a) und einer unteren Wand, die einen Innenraum definieren, wobei das Wärmespeichermaterial (36) in dem Innenraum untergebracht ist, wobei der Wärmespeichertank (32) eine Wärmeübertragungsfläche (46b) aufweist, die als Außenfläche der Seitenwand des Wärmespeichertanks (32) dient, um Wärme des Kompressors (6) auf das Wärmespeichermaterial (36) zu übertragen, wobei die Wärmeübertragungsfläche (46b) so angeordnet ist, dass sie den im Wesentlichen zylindrischen Kompressor (6) umgibt; und
ein flexibles Plattenelement, das zwischen der Wärmeübertragungsfläche (46b) und dem Kompressor (6) eingefügt ist, wobei das Plattenelement von einer Wärmeübertragungsplatte (51) gebildet wird, um Wärme, die von dem Kompressor (6) erzeugt wird, auf die Wärmeübertragungsfläche (46b) des Wärmespeichertanks (32) zu übertragen,
**dadurch gekennzeichnet, dass**
das Plattenelement mit einer Vielzahl von Entlüftungslöchern (54) versehen ist,
wobei in der Wärmeübertragungsfläche (46b) des Wärmespeichertanks (32) eine Vielzahl von Rillen (53) zum Abführen von Luft vorgesehen ist und die Rillen sich in einer Längsrichtung erstrecken,
wobei die Wärmeübertragungsplatte (51) eine Dicke von 0,5 bis 2,0 mm hat.

2. Wärmespeichervorrichtung nach Anspruch 1, wobei die Rillen in der Wärmeübertragungsfläche (46b) und die Entlüftungslöcher (54) in der Wärmeübertragungsplatte (51) in aufeinander abgestimmten Abständen vorgesehen sind, so dass sie sich an den gleichen Positionen befinden.

3. Wärmespeichervorrichtung nach Anspruch 2, wobei die Entlüftungslöcher (54) eine Gesamtfläche haben, die 25 % oder weniger einer Fläche der gesamten Wärmeübertragungsplatte (51) einnimmt.

4. Wärmespeichervorrichtung nach Anspruch 2 oder 3, wobei die in der Wärmeübertragungsplatte (51) vorgesehenen Entlüftungslöcher (54) jeweils einen Lochdurchmesser von ϕ1 mm bis ϕ3 mm haben und im Wesentlichen in gleichen Abständen von 5 mm bis 15 mm ausgerichtet sind.

5. Klimaanlage, welche eine Wärmespeichervorrichtung nach einem der Ansprüche 1 bis 4 umfasst.

## Revendications

1. Dispositif de stockage de chaleur disposé de façon à entourer un compresseur (6) sensiblement cylindrique, le dispositif de stockage de chaleur comprenant:
un matériau de stockage de chaleur (36) pour stocker la chaleur générée par le compresseur (6);
un réservoir de stockage de chaleur (32) possédant une paroi latérale (46a) et une paroi inférieure qui définissent un espace interne, le matériau de stockage de chaleur (36) étant logé dans l'espace intérieur, le réservoir de stockage de chaleur (32) possédant une surface de transfert de chaleur (46b) servant de surface extérieure de la paroi latérale du réservoir de stockage de chaleur (32) pour transférer la chaleur du compresseur (6) au matériau de stockage de chaleur (36), la surface de transfert de chaleur (46b) étant disposée de façon à entourer le compresseur (6) sensiblement cylindrique; et
un élément de feuille souple étant interposé entre la surface de transfert de chaleur (46b) et le compresseur (6), l'élément de feuille étant réalisé par une feuille de transfert de chaleur (51) pour transférer la chaleur générée par le compresseur (6) à la surface de transfert de chaleur (46b) du réservoir de stockage de chaleur (32),
**caractérisé en ce que**
l'élément de feuille est pourvu d'une pluralité de trous d'aération (54),
une pluralité de rainures (53) pour décharger de l'air étant disposées dans la surface de transfert de chaleur (46b) du réservoir de stockage de chaleur (32) et les rainures s'étendant dans une direction longitudinale,
la feuille de transfert de chaleur (51) présentant une épaisseur de 0,5 à 2,0 mm.

2. Dispositif de stockage de chaleur selon la revendication 1, dans lequel les rainures dans la surface de transfert de chaleur (46b) et les trous d'aération (54) dans la feuille de transfert de chaleur (51) sont disposés à des pas adaptés l'un à l'autre de façon à être situés aux mêmes positions.

3. Dispositif de stockage de chaleur selon la revendication 2, dans lequel les trous d'aération (54) possèdent une surface totale occupant 25 % ou moins d'une surface de la totalité de la feuille de transfert de chaleur (51).

4. Dispositif de stockage de chaleur selon la revendication 2 ou 3, dans lequel les trous d'aération (54) disposés dans la feuille de transfert de chaleur (51) possèdent chacun un diamètre de trou de ϕ1 mm à ϕ3 mm et sont alignés sensiblement à des intervalles égaux de 5 mm à 15 mm.

5. Climatiseur comprenant un dispositif de stockage de chaleur selon l'une quelconque des revendications 1 à 4.
